# EUROPÄISCHE PATENTANMELDUNG

(11) **EP 4 629 115 A1**
(43) Veröffentlichungstag der Anmeldung: **08.10.2025**
(21) Anmeldenummer: 24168684.9
(22) Anmeldetag: 05.04.2024
(51) Int. Cl.: G06F 21/44, G06F 21/78, H04L 9/40, G06F 21/57

(54) **VERFAHREN, INSBESONDERE COMPUTERGESTÜTZTES VERFAHREN, VORRICHTUNG, COMPUTERPROGRAMMPRODUKT UND COMPUTERLESBARES MEDIUM**

(71) Anmelder: Siemens Aktiengesellschaft, 80333 München (DE)
(72) Erfinder: Fazekas-Zisch, Szófia, 78337 Öhningen (DE); Reiter, Andreas, 8401 Kalsdorf bei Graz (AT)
(74) Vertreter: Siemens Patent Attorneys

(57) **Zusammenfassung**

Die Erfindung betrifft ein Verfahren, insbesondere computergestütztes Verfahren, zur Regulierung des Zugriffs auf ein Datenobjekt, wobei sich das Datenobjekt auf einem Device befindet und das Device ein Hardware Security Module (HSM) aufweist oder mit einem solchen verbunden ist, wobei das Verfahren die folgenden Schritte umfasst:
Erzeugen eines applikationsbezogenen Credentials, welches dem Datenobjekt zugeordnet ist, durch eine auf dem Device enthaltene Software Applikation, insbesondere unter Verwendung des Hardware Security Module (HSM);
Verschlüsseln des applikationsbezogenen Credentials durch das Hardware Security Module (HSM) und Speichern des verschlüsselten applikationsbezogenen Credentials insbesondere im Kontext der Software- Applikation, so dass lediglich die Software Applikation, welche das applikationsbezogene Credential erzeugt hat, mittels eines Schlüssels über das auf dem Hardware Security Module (HSM) gespeicherte und/oder in das Hardware Security Module (HSM) geladene applikationsbezogene Credential auf das Datenobjekt zugreifen kann.

## Beschreibung

Die vorliegende Erfindung betrifft ein Verfahren, insbesondere ein computergestütztes Verfahren, zur Regulierung des Zugriffs auf ein Datenobjekt, wobei sich das Datenobjekt auf einem Device befindet und das Device ein Hardware Security Module (HSM) aufweist oder mit einem solchen verbunden ist. Ferner betrifft die Erfindung eine Vorrichtung, insbesondere ein Device, zur Datenverarbeitung. Außerdem betrifft die Erfindung ein Computerprogrammprodukt und ein computerlesbares Medium.

Datensicherheit spielt in einer vernetzten Welt eine zunehmende Rolle. Kommunikation und die Datenerfassung insbesondere während des Ablaufs von Industrieprozessen sind wichtig für den sicheren Betrieb von Industrieanlagen. Dies erfordert ein hinreichendes Management betreffend die Berechtigungsnachweise, welche auch als Credentials bezeichnet werden. Diese werden eingesetzt zur Authentifizierung und zur Regulierung des Zugriffs auf verschiedene Datenobjekte.

Hierzu werden Devices, beispielsweise Rechnereinrichtungen, Steuerungseinheiten oder allgemein Geräte häufig mit separaten Sicherheitschips versehen. Diese können auch als Hardware Security Module (HSM) bezeichnet werden.

Ein System oder eine Umgebung, beispielsweise eine Anlagensteuerung, weist verschiedene Funktionalitäten auf. Beispielsweise kann ein solches System Komponenten aufweisen, die Zugang zu Credentials benötigen, um ein Device zu authentifizieren und die Herkunft des Devices zu beweisen. Daneben kann es Software-Applikationen geben, welche Credentials erzeugen und darauf auch jederzeit zugreifen müssen. Hierbei ist es wichtig, dass eine solche Software-Applikation nur auf die eigenen Credentials und nicht auf die Credentials anderer Software-Applikationen zugreifen kann.

Beispiele für solche Credentials sind unter anderem das 802.1 AR-IDevID Credential, welches bei der Herstellung eines Devices durch den Hersteller erzeugt wird und zur Identifikation des Device dient. Daneben gibt es sogenannte LDevID-Credentials, welche dazu dienen, in der Arbeitsumgebung die Identifikation vorzunehmen.

Bei der Verwendung solcher Berechtigungsnachweise bzw. Credentials, welche auch als kryptographische Referenzen bezeichnet werden können, ist es unerlässlich, dass nur eine autorisierte Komponente Zugang dazu hat. Andere Komponenten könnten das Credential missbrauchen und damit Zugang zu Datenobjekten erlangen, was nicht gewünscht ist.

Auch bei Software-Applikationen besteht die Notwendigkeit, dass nur die jeweilige Applikation Zugang zu den sie betreffenden Credentials hat. Insbesondere kann es sich hier um den privaten Schlüssel passend zu einem öffentlichen Zertifikat der Applikation handeln.

Insbesondere bei größeren Umgebungen oder Anordnungen von Komponenten, beispielsweise Anlagensteuerungen, besteht regelmäßig die Notwendigkeit, neue Komponenten hinzuzufügen und in die Umgebung, beispielsweise in eine Anlagensteuerung oder in die Softwareumgebung, zu integrieren. Hierbei kann es sich sowohl um Komponenten des Herstellers handeln, als auch um Komponenten von Drittanbietern. Hierbei besteht das Bedürfnis, diese Komponenten möglichst einfach und ohne Änderungen im Quellcode betreffend bestehende Software-Applikationen einbinden zu können.

Prinzipiell besteht die Möglichkeit, eine vollständige Verschlüsselung des Laufwerks vorzunehmen, um Credentials zu schützen. Nachteilig ist hier jedoch, dass eine solche Ausgestaltung nur dann Schutz bietet, wenn das Laufwerk entnommen wird. Alternativ können bestimmte Credentials, beispielsweise IDevID-Credentials, mittels eines Hardware-Security-Modules (HSM) beispielsweise in Form eines Trusted Platform Modules (TPM) geschützt werden. Eine solche Anwendung ist jedoch für Geräte oder Devices mit einer Vielzahl von Software-Applikationen problematisch. Üblicherweise werden sogenannte Plain on Disc Credential Storage Formats (PKCS#12) verwendet, wobei die Software-Applikation direkten Zugang zu dem sensitiven privaten Schlüssel hat. Hier besteht die Problematik, dass bei einem unerlaubten Zugriff auf das Device eine Datei, welche den privaten Schlüssel beinhaltet, vervielfältigt werden kann, so dass auf einem anderen Device ein Angreifer die Identität oder den Ablauf einer Software-Applikation kopieren kann. Üblicherweise haben Software-Applikationen keinen Zugang zu einem Hardware Security Module.

Vor diesem Hintergrund besteht die Aufgabe darin, ein alternatives Verfahren zur Regulierung des Zugriffs auf ein Datenobjekt zu schaffen, welches insbesondere ein einfaches Credential Management ermöglicht. Diese Aufgabe ist bei einem Verfahren der eingangsgenannten Art dadurch gelöst, dass es die folgenden Schritte umfasst:
- Erzeugen eines applikationsbezogenen Credentials, welches dem Datenobjekt zugeordnet ist, durch eine auf dem Device enthaltene Software Applikation, insbesondere unter Verwendung des Hardware Security Module (HSM);
- Verschlüsseln des applikationsbezogenen Credentials durch das Hardware Security Module (HSM) und Speichern des verschlüsselten applikationsbezogenen Credentials insbesondere im Kontext der Software- Applikation (3), bevorzugt auf dem Hardware Security Module (HSM),
so dass lediglich die Software Applikation, welche das applikationsbezogene Credential erzeugt hat, mittels eines Schlüssels über das auf dem Hardware Security Module (HSM) gespeicherte und/oder in das Hardware Security Module (HSM) geladene applikationsbezogene Credential auf das Datenobjekt zugreifen kann.

Der Erfindung liegt die grundsätzliche Überlegung zugrunde, dass die eine Software-Applikation, welche auf dem Device installiert ist oder sich dort befindet oder dort abläuft, bei Bedarf ein Credential erzeugt, welches unmittelbar verschlüsselt und auf dem Hardware-Security-Mudule (HSM) gespeichert wird. Auf diese Weise kann auf der einen Seite sichergestellt werden, dass nur die Software-Applikation, welche dieses Credential erzeugt hat, Zugang dazu hat und es benutzen kann. Gleichzeitig wird aufgrund der Bindung des Credentials an das Hardware-Security-Module ausgeschlossen, dass das Credential vervielfältigt werden kann und auf anderen Systemen oder Devices genutzt werden kann. Außerdem wird durch die Speicherung des applikationsbezogenen Credentials auf dem Hardware Security Module (HSM) eine Trennung zwischen dem Betriebssystem bzw. dem Betrieb der Software-Applikation und den schützenswürdigen Credentials herbeigeführt.

Bevorzugt wird als Hardware-Security-Module (HSM) ein Trusted Platform Module (TPM) verwendet, mit dem Ziel, dass nur die Software-Applikation auf das durch diese erzeugte applikationsbezogene Credential zugreifen kann. Bei einem Trusted Platform Module (TPM) handelt es sich bevorzugt um einen Chip, der einen Computer oder ähnliche Geräte um bestimmte Sicherheitsfunktionen erweitern kann. Bevorzugt kann das Trusted Platform Module (TPM) nach dem TPM 2.0-Standard ausgebildet sein. Beispielsweise kann das Trusted Platform Module (TPM) auf unterschiedliche Krypto-Algorithmen zugreifen oder diese verwenden, beispielsweise SHA-1, SHA-256, RSA2048, und/oder Elyptic Curve Cryptography P256.

In weiterer Ausgestaltung kann das applikationsbezogene Credential als transient gespeichertes Credential erzeugt werden. Darunter ist insbesondere zu verstehen, dass das Credential nur dann in das Hardware Security Module geladen wird, wenn die betreffende Software-Applikation benutzt wird.

Beispielsweise kann das applikationsbezogene Credential ein Public-Private Key Pair sein oder ein solches enthalten, insbesondere im Fall, dass eine asymmetrische Kryptographie angewendet wird, um beispielsweise übliche Berechtigungsnachweise zu erbringen. Die Credentials, die zur Erstellung oder zum Erbringen der Berechtigungsnachweise verwendet werden, sind schützenswürdig. Wenn zum Beispiel eine asymmetrische Kryptographie bei der Erstellung eines Credentials angewendet wird, kann das Credential einen privaten und einen public Key umfassen oder daraus bestehen.

In weiterer Ausgestaltung der Erfindung können sämtliche Credentials des Device im Hardware Security Module (HSM) verschiedenen Hierarchiestufen zugeordnet werden oder sein. Diese Ausgestaltung basiert auf der Überlegung, eine entsprechende Architektur im Hardware Security Module (HSM), welches bevorzugt als Trusted Platform Module (TPM) ausgestaltet ist, vorzusehen, um je nach Bedeutung der verschiedenen Credentials entsprechende Sicherungsmechanismen vorzusehen. Neben den applikationsbezogenen Credentials können dabei IDevID-Credentials und/oder LDevID-(generic) Credentials vorgesehen sein.

Der Zugriff auf Credentials, welches den verschiedenen Hierarchiestufen zugeordnet sind, kann geschützt, insbesondere passwort- oder PIN-geschützt erfolgen. Insbesondere bei höheren Sicherheitsstufen kann ein komplexes Policy- Verfahren genutzt werden, um den Zugriff zu regeln.

Bevorzugt erfolgt der Zugriff auf die Credentials der verschiedenen Hierarchiestufen unterschiedlich. Konkret kann die Freigabe des Zugriffs auf Credentials eine Abfrage des Systemzustands des Devices beinhalten und/oder über die Eingabe eines Passworts oder einer PIN erfolgen.

Bevorzugt erfolgt eine Zuordnung der Credentials in drei verschiedene Hierarchiestufen. Dies entspricht einer üblichen Architektur eines Trusted Platform Modules. Der Zugang zu den verschiedenen Hierarchiestufen kann dabei unterschiedlich geregelt sein. Möglich ist ein Zugriff, bei welchem eine Abfrage des Systemzustandes erfolgt. Mit anderen Worten kann ein Zugriff auf bestimmte Credentials nur dann erfolgen, wenn das System einen bestimmten Zustand aufweist. Möglich ist auch, dass der Zugriff auf ein anderes Objekt delegiert wird, mit welchem die Autorisierung überprüft wird. Beispielsweise kann dies mehrstufig erfolgen, insbesondere wenn ein Zugang zu einem bestimmten Credential nur gestattet wird, wenn eine Autorisierung des Zugangs zu der betreffenden Hierarchiestufe vorliegt. Denkbar ist auch, dass eine Autorisierung auf einem Schlüssel (Key) basiert, was dann die Eingabe eines Passworts oder einer PIN beinhalten kann.

In weiterer Ausgestaltung werden die applikationsbezogenen Credentials einer eigenen Hierarchiestufe zugeordnet, welche auch als Owner-Hierarchiestufe bezeichnet werden kann. Dies basiert auf der Überlegung, dass die applikationsbezogenen Credentials, welche auch als LDevlD-application credentials bezeichnet werden können, häufig verglichen mit IDevID-Credentials und LDevID-generic- Credentials geringere Sicherheitsanforderungen haben und möglicherweise auf andere Methoden der Autorisierung zurückgreifen.

Bevorzugt sind die Hierarchiestufen persistent, d.h. dauerhaft ausgebildet. Jeder Hierarchiestufe kann ein Zufallswert (Random Seed) zugeordnet sein.

Das Device kann Onboarding- Komponenten und/oder priviledged (privilegierte) Customer-Komponenten aufweisen, denen erhöhte Zugriffsrechte auf die Hierarchiestufen bzw. den diesen zugeordneten Credentials zugewiesen sind.

In weiterer Ausgestaltung kann das Device IDevID-Credentials aufweisen, welche bevorzugt auf dem Device während dessen Herstellungsprozesses erzeugt werden. Hierbei handelt es sich um Credentials, welche dem Device zugeordnet sind und insbesondere zur Identifizierung des Devices und insbesondere des Herstellers bevorzugt während eines onboarding- Prozesses dienen. Diese sind unveränderlich und werden üblicherweise von hoch privilegierten Komponenten (onboarding- Komponenten) benötigt.

Die IDevID-Credentials sind bevorzugt als persistente, d.h. insbesondere dauerhafte, Credentials ausgebildet oder erzeugt worden. Mit anderen Worten können die IDevID-Credentials persistent gespeichert sein. Bevorzugt sind oder werden die IDevID-Credentials einer eigenen Hierarchiestufe zugeordnet, welche auch als Endorsement-Hierarchiestufe bezeichnet werden kann.

Das Device kann generische LDevID Credentials (LDevID-generic-Credentials) aufweisen. Diese werden bevorzugt beim onboarding des Device in einer Umgebung, beispielsweise einer Kundenumgebung, erzeugt. Ein Bestandteil kann die Erzeugung eines asymmetrischen Schlüsselpaares sein (Private-public key pair), bevorzugt auf dem Hardware-Security-Module (HSM) bzw. unter Verwendung des Hardware Security Modules (HSM). Die LDevID-generic Credentials können als persistente Credentials ausgebildet sein oder erzeugt werden. Mit anderen Worten können die LDevID-generic-Credentials persistent gespeichert sein. Bevorzugt sind oder werden die LDevID-generic-Credentials einer eigenen Hierarchiestufe zugeordnet, welche auch als Platform-Hierarchiestufe bezeichnet werden kann. Bevorzugt werden die LDevID-generic-Credentials ähnlich wie die IDevID-Credentials von einer privilegierten Komponente genutzt. Zu den privilegierten Komponenten können onboarding-Komponenten und/oder privilegierte (priviledged) Customer-Komponenten gehören.

Die Software-Applikation ist bevorzugt derart ausgestaltet, dass sie mit dem Hardware Security Model (HSM), auf welchem die Credentials gespeichert werden sollen, interagieren kann.

Bevorzugt wird das Verfahren verwendet, um eine neue Komponente in eine bestehende Umgebung, beispielsweise eine Steuerungsanordnung einer Anlage, insbesondere einer Industrieanlage, zu integrieren.

Die der Erfindung zugrundeliegende Aufgabe wird ferner gelöst durch eine Vorrichtung, insbesondere ein Device, zur Datenverarbeitung, umfassend Mittel zur Ausführung eines Verfahrens wie zuvor beschrieben.

Ferner ist die Aufgabe gelöst durch ein Computerprogrammprodukt umfassend Befehle, die bei einer Ausführung des Programms durch einen Computer, insbesondere eine Vorrichtung wie zuvor beschrieben, diesen/diese veranlassen, Verfahren wie zuvor beschrieben auszuführen.

Schließlich ist die der Erfindung zugrundeliegende Aufgabe gelöst durch ein computerlesbares Medium, insbesondere ein Speichermedium, auf welchem das zuvor beschriebene Computerprogrammprodukt gespeichert ist.

Für die weitere Ausgestaltung der Erfindung wird auf die Unteransprüche und auf die beiliegende Beschreibung eines Ausführungsbeispiels unter Bezugnahme auf die Zeichnung verwiesen. In der Zeichnung zeigt:

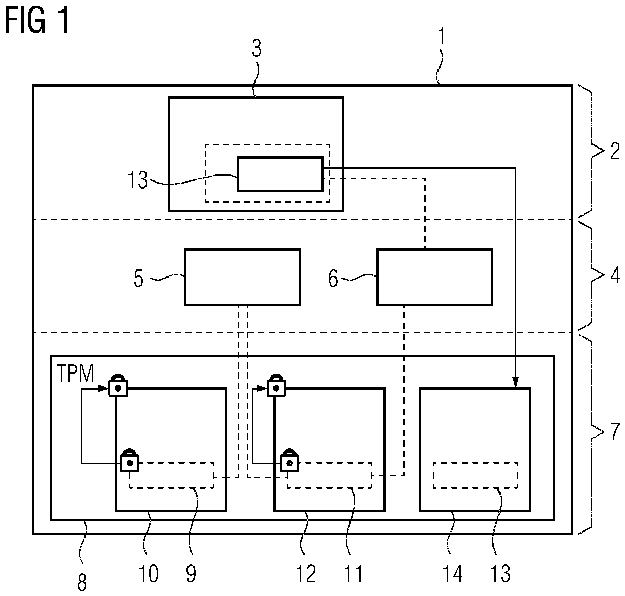

Figur 1 einen schematischen Ablauf des erfindungsgemäßen Verfahrens zur Regulierung des Zugriffs auf ein Datenobjekt.

Die Figur 1 zeigt schematisch den Aufbau eines Device 1. Hierbei kann es sich beispielsweise um einen PC, einen Industrie-PC, eine Steuerung für eine Industrieanlage oder ein größeres System von Datenverarbeitungsanlagen handeln.

Das Device 1 umfasst Betriebskomponenten 2, zu denen vorliegend eine beispielhafte Software-Applikation 3 gehört. Die Softwareapplikation 3 kann beispielsweise Steuerungsfunktionen in einer Industrieanlage wahrnehmen oder zur Datenaufzeichnung von Produktionsparametern verwendet werden.

Daneben weist das Device 1 privilegierte Komponenten 4 auf. Diese können beispielsweise sogenannte Onboarding Komponenten 5 und priviledged Customer-Komponenten 6 umfassen.

Zudem umfasst das Device 1 ein Hardware Security Model (HSM) 7, welches vorliegend als Trusted Platform Module (TPM) 8 nach dem TPM 2.0-Standard ausgebildet ist.

Das Trusted Platform Module 8 dient dazu, verschiedenartige Credentials des Device 1 aufzunehmen bzw. zu speichern. Sämtliche Credentials des Device 1 und dem Trusted Platform Module (TPM) 8 sind drei verschiedenen Hierarchiestufen zugeordnet.

Das Device 1 weist zunächst IDevID-Credentials 9 auf, die einer Endorsement-Hierarchiestufe 10 zugeordnet sind. IDevID-Credentials 9 sind bevorzugt dadurch gekennzeichnet, dass diese während des Herstellungsprozesses des Device 1 erzeugt werden und persistent, d.h. dauerhaft existieren bzw. gespeichert werden.

Daneben weist das Device (generische) LDevID-generic- Credentials 11 auf, welche einer Platform- Hierarchiestufe 12 zugeordnet sind. Sowohl der Zugriff zur Endorsement-Hierarchiestufe 10 als auch der Zugriff zur Platform- Hierarchiestufe 12 ist geschützt beispielsweise über einen Random Key möglich. Daneben sind auch die IDevID-Credentials 9, sowie die LDevID-generic- Credentials 11 jeweils durch eine entsprechende Verschlüsselung geschützt. Um Zugriff auf die IDevID-Credentials und die LDevID-generic-Credentials 11 zu erhalten, ist somit ein separater Zugriff sowohl zur jeweiligen Hierarchiestufe 10, 12, als auch zum jeweiligen Credential 9, 11 erforderlich.

Die Onboarding-Komponente 5 hat dabei Zugriff auf die IDevID-Credentials 9. Gleichzeitig ist die Onboarding-Komponente 5 autorisiert, insbesondere generische LDevID-generic-Credentials 11 zu erzeugen. Dies findet bevorzugt beim onboarding-Prozess des Device 1 in einer Umgebung, beispielsweise in einer Kundenumgebung, statt. Es ist vorgesehen, dass die Priviledged Customer-Komponente 6 diese insbesondere generischen LDevID-Credentials 11 nutzt.

Das erfindungsgemäße Verfahren sieht applikationsbezogene Credentials 13 vor. Diese werden von der Software-Applikation 3, sofern diese läuft, erzeugt. Anschließend werden diese direkt auf dem Trusted-Platform-Module (TPM) 8 verschlüsselt, jedoch bevorzugt extern insbesondere im Kontext der Software-Applikation 3 gespeichert. Auf diese Weise kann lediglich die Software-Applikation 3, welche das applikationsbezogene Credential 13 erzeugt und somit Zugriff auf das im Kontext der Software-Applikation 3 gespeicherten und verschlüsselten Credential 3 hat, über das Trusted Platform Module (TPM) 8 auf ein Datenobjekt, welches diesem verschlüsselten Credential 13 zugeordnet ist, zugreifen. Der Zugang zur Software-Applikation 3, insbesondere zu Dateien betreffend die Verschlüsselung der applikationsbezogenen Credentials 13, sind dabei bevorzugt durch das Betriebssystem geschützt.

Konkret werden die applikationsbezogenen Credentials 13 als transiente Credentials erzeugt. Sie sind einer Owner- Hierarchiestufe 14 zugeordnet. Durch die Unterbringung auf dem Trusted Platform Module (TPM) 8 und die transiente Ausgestaltung der applikationsbezogenen Credentials 13 ist sichergestellt, dass lediglich die Software-Applikation 3, welche die applikationsbezogenen Credentials 13 erzeugt hat, auf diese zugreifen kann.

Gleichzeitig ist sichergestellt, dass eine Vervielfältigung des applikationsbezogenen Credentials 13 nicht möglich ist und damit auch eine Verwendung auf anderen Systemen oder Devices ausscheidet.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren, insbesondere computergestütztes Verfahren, zur Regulierung des Zugriffs auf ein Datenobjekt, wobei sich das Datenobjekt auf einem Device (1) befindet und das Device (1) ein Hardware Security Module (HSM) (7) aufweist oder mit einem solchen verbunden ist, wobei das Verfahren die folgenden Schritte umfasst:
- Erzeugen eines applikationsbezogenen Credentials (13), welches dem Datenobjekt zugeordnet ist, durch eine auf dem Device (1) enthaltene Software Applikation (3), insbesondere unter Verwendung des Hardware Security Module (HSM) (7);
- Verschlüsseln des applikationsbezogenen Credentials (13) durch das Hardware Security Module (HSM) (7) und Speichern des verschlüsselten applikationsbezogenen Credentials (13) insbesondere im Kontext der Software- Applikation (3),
so dass lediglich die Software Applikation (3), welche das applikationsbezogene Credential (13) erzeugt hat, mittels eines Schlüssels über das auf dem Hardware Security Module (HSM) (7) gespeicherte und/oder in das Hardware Security Module (HSM) (7) geladene applikationsbezogene Credential (13) auf das Datenobjekt zugreifen kann.

2. Verfahren nach Anspruch 1, **dadurch gekennzeichnet, dass** als Hardware Security Module (HSM) (7) ein Trusted Platform Module (TPM) (8) verwendet wird, so dass nur die Software-Applikation (3) auf das durch diese erzeugte applikationsbezogene Credential (13) zugreifen kann.

3. Verfahren nach Anspruch 1 oder Anspruch 2, **dadurch gekennzeichnet, dass** das applikationsbezogene Credential (13) als transientes Credential erzeugt wird, und/oder dass.das applikationsbezogene Credential (13) ein public-private Key Pair ist oder ein solches enthält.

4. Verfahren nach einem der vorherigen Ansprüche, **dadurch gekennzeichnet, dass** sämtliche Credentials des Device (1) im Hardware Security Module (HSM) (7) verschiedenen Hierarchiestufen zugeordnet werden.

5. Verfahren nach Anspruch 4, **dadurch gekennzeichnet, dass** der Zugriff auf Credentials der verschiedenen Hierarchiestufen geschützt, insbesondere passwortgeschützt erfolgt, wobei der Zugriff auf die Credentials der verschiedenen Hierarchiestufen bevorzugt unterschiedlich stattfindet.

6. Verfahren nach Anspruch 4 oder 5, **dadurch gekennzeichnet, dass** die Freigabe des Zugriffs auf Credentials eine Abfrage des Systemzustands des Devices (1) beinhaltet und/oder über die Eingabe eines Passworts oder einer PIN erfolgt.

7. Verfahren nach einem der Ansprüche 4 bis 6, **dadurch gekennzeichnet, dass** eine Zuordnung der Credentials in drei verschiedene Hierarchiestufen erfolgt, wobei die applikationsbezogenen Credentials (13) einer Hierarchiestufe zugeordnet werden.

8. Verfahren nach einem der vorherigen Ansprüche, **dadurch gekennzeichnet, dass** das Device (1) IDevID- Credentials aufweist, welche bevorzugt auf dem Device (1) während dessen Herstellungsprozesses erzeugt werden.

9. Verfahren nach Anspruch 8, **dadurch gekennzeichnet, dass** die IDevID-Credentials (9) als persistente Credentials ausgebildet sind oder erzeugt werden, und/oder dass.IDevID-Credentials (9) einer Hierarchiestufe (10) zugeordnet sind oder werden.

10. Verfahren nach einem der vorherigen Ansprüche, **dadurch gekennzeichnet, dass** das Device LDevID-generic-Credentials (11) aufweist, die bevorzugt beim onboarding des Device (1) in einer Umgebung auf dem Hardware Security Module (HSM) (7) erzeugt werden.

11. Verfahren nach Anspruch 10, **dadurch gekennzeichnet, dass** die LDevID-generic-Credentials (11) als persistente Credentials ausgebildet sind oder erzeugt werden.

12. Verfahren nach Anspruch 10 oder 11 und nach einem der Ansprüche 4 bis 7, **dadurch gekennzeichnet, dass** die LDevID-generic-Credentials (11) einer mittleren (Plattform) Hierarchiestufe (12) zugeordnet sind oder werden.

13. Vorrichtung, insbesondere Device (1), zur Datenverarbeitung, umfassend Mittel zur Ausführung eines Verfahrens nach einem der vorherigen Ansprüche.

14. Computerprogrammprodukt umfassend Befehle, die bei der Ausführung des Programms durch einen Computer, insbesondere durch eine Vorrichtung nach Anspruch 15 diesen veranlassen, das Verfahren nach einem der Ansprüche 1 bis 12 auszuführen.

15. Computerlesbares Medium, insbesondere Speichermedium, auf welchem das Computerprogrammprodukt nach Anspruch 14 gespeichert ist.
